# EUROPEAN PATENT APPLICATION

(11) **EP 4 730 551 A2**
(43) Date of publication of application: **22.04.2026**
(21) Application number: 26161974.6
(22) Date of filing: 03.11.2021
(51) Int. Cl.: H01M 50/578

(54) **SECONDARY BATTERY AND MANUFACTURING METHOD OF THE SAME**

(30) Priority: 24.12.2020 KR 20200183516
(62) Divisional of application: 21911230.7
(71) Applicant: LG Energy Solution, Ltd., Seoul 07335 (KR)
(72) Inventor: JANG, Wook Hee, 34122 Daejeon (KR); KIM, Do Gyun, 34122 Daejeon (KR); DO, Jin Uk, 34122 Daejeon (KR); KIM, Chan Bae, 34122 Daejeon (KR)
(74) Representative: Goddar, Heinz J.

(57) **Abstract**

A secondary battery according to an embodiment of the present disclosure includes an electrode assembly; a battery case that houses the electrode assembly and has an opened upper part; and a cap assembly that is coupled to the opened upper part of the battery case, wherein the cap assembly comprises a safety vent formed with a notch portion, and wherein a gap formed by the notch portion is closed.

## Description

### TECHNICAL FIELD

### CROSS CITATION WITH RELATED APPLICATION(S)

This application claims the benefit of Korean Patent Application No. 10-2020-0183516 filed on December 24, 2020 with the Korean Intellectual Property Office, the disclosure of which is incorporated herein by reference in its entirety.

The present disclosure relates to a secondary battery and a method for manufacturing the same, and more particularly, to a secondary battery with improved vibration resistance and a method for manufacturing the same.

### BACKGROUND

Recently, as energy source price is increasing due to the depletion of fossil fuels and increasing interest is being paid to environmental pollution, the demand for environmentally-friendly alternative energy sources is bound to play an important role in the future life. Thus, research into techniques for generating various kinds of power, such as nuclear energy, solar energy, wind energy, and tidal power, is underway, and power storage apparatuses for more efficient use of the generated energy are also drawing much attention.

In particular, along with the technology development and increased demand for mobile devices, demand for batteries as energy sources has been increasing rapidly, and accordingly, much research on batteries which can meet the various needs has been carried out.

Typically, the demand for the lithium secondary battery, such as a lithium ion battery or a lithium ion polymer battery, which have advantages such as a high energy density, a discharge voltage, an output stability, and the like is high.

Further, the secondary battery may be classified based on the structure of an electrode assembly having a structure in which a cathode and an anode are stacked with a separator being interposed therebetween. Typically, there may mentioned, for example, a jelly-roll type electrode assembly having a structure in which long sheets of cathodes and anodes are wound in the state in which a separator is interposed therebetween, a stacked type electrode assembly having a structure in which pluralities of cathodes and anodes, cut by a certain size unit, are sequentially stacked in the state in which separators are interposed therebetween, or the like. In recent years, in order to solve problems caused by the jelly-roll type electrode assembly and the stacked type electrode assembly, there has been developed a stacked/folded type electrode assembly, which is a combination of the jelly-roll type electrode assembly and the stacked type electrode assembly, having a structure in which unit cells stacked with predetermined units of the cathodes and the anodes are sequentially wound with a separator being interposed therebetween in the state of having been placed on a separation film.

Further, based on the shape of a battery case, the secondary battery is classified into a cylindrical battery where an electrode assembly is mounted in a cylindrical case, a prismatic battery where an electrode assembly is mounted in a prismatic can, and a pouch type battery where an electrode assembly is mounted in a pouch type case of an aluminum laminate sheet.

Meanwhile, a secondary battery can be suitably used in the market as long as it satisfies performance suitable for the intended use and at the same time, has safety. When designing a secondary battery, the design factors are determined in consideration of these performance and safety aspects at the same time. Batteries whose design and manufacturing are completed are subjected to performance evaluations such as lifespan, high rate characteristics, and high/low temperature characteristics, as well as to safety evaluations such as overcharge, over-discharge, impact, nail test, and hot box.

Among the various types of secondary batteries, a cylindrical secondary battery may include a current interrupt device (CID) that interrupts the current between the electrode terminal and the electrode tab to prevent additional reactions, when gas is suddenly generated inside the secondary battery in an abnormal state such as overcharge and the internal pressure exceeds a certain level.

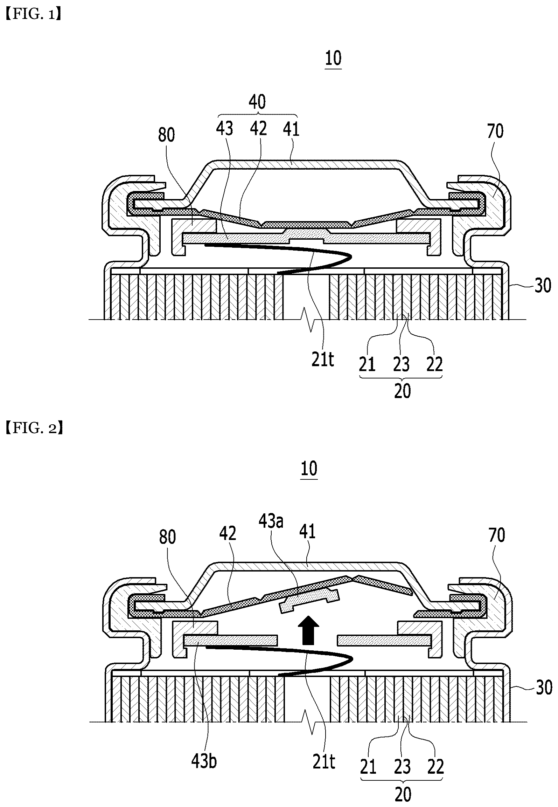

Fig. 1 is a partial cross-sectional view which shows a cross-section of the upper part of a conventional cylindrical secondary battery.

Referring to Fig. 1, a cylindrical secondary battery 10 can be manufactured by housing an electrode assembly 20 in a cylindrical case 30, and mounting a cap assembly 40 onto the opened upper part of the cylindrical case 30.

The electrode assembly 20 may be a jelly-roll type electrode assembly in which a first electrode 21, a second electrode 22, and a separator 23 are wound.

The cap assembly 40 may include an upper end cap 41, an internal pressure drop safety vent 42 and a current interrupt device (CID) 43. The upper end cap 41 and the safety vent 42 can form a structure in close contact with each other, and the safety vent 42 can be connected to the central part of the current interrupt device 43. A first electrode tab 21t protruding from the first electrode 21 can be connected to the lower end part of the current interrupt device 43. Here, the first electrode 21 may be a cathode, and the first electrode tab 21t may be a cathode tab.

As described above, the upper end cap 41 can be directly or indirectly connected to the safety vent 42, the current interrupt device 43 and the first electrode tabs 21t to be electrically connected to the electrode assembly 20, and can function as an electrode terminal.

Meanwhile, a gasket 70 for sealing between the cap assembly 40 and the cylindrical case 30 and a CID gasket 80 for wrapping the edge of the current interrupt device 43 may be arranged.

Fig. 2 is a partial cross-sectional view which shows a state when the internal pressure of the cylindrical secondary battery of Fig. 1 is increased.

Referring to Fig. 2, when the cylindrical secondary battery 10 is exposed to high temperature or is placed in an abnormal operating state to increase the internal pressure, the shape of the safety vent 42 is reversed, and the current interrupt device 43 is separated to interrupt the current. Specifically, the current interrupt device 43 is divided into a portion 43a connected to the safety vent 42 and a portion 43b connected to the first electrode tab 21t, so that the flow of current between the upper end cap 41 and the first electrode tab 21 functioning as an electrode terminal is interrupted. Further, if the internal pressure is increased significantly, the notch portion of the safety vent 42 is cut, the safety vent 42 is opened, and the internal gas is discharged.

When the upper end cap 41 is provided as in the conventional cylindrical secondary battery 10, the structural rigidity is excellent, but when the internal gas is discharged while the safety vent 42 is opened, there is a drawback in that a spatial portion is degraded by the upper cap 41 and thus, the safety vent 42 cannot be fully opened and the gas discharge is restricted.

### DETAILED DESCRIPTION OF THE INVENTION

### TECHNICAL PROBLEM

It is an object of the present disclosure to provide a secondary battery having vibration resistance and structural rigidity while effectively providing an internal gas discharge path, and a method for manufacturing the same.

However, the problem to be solved by the embodiments of the present disclosure is not limited to the above-described problems, and can be variously expanded within the scope of the technical idea included in the present disclosure.

### TECHNICAL SOLUTION

According to one embodiment of the present disclosure, there is provided a secondary battery comprising: an electrode assembly; a battery case that houses the electrode assembly and has an opened upper part; and a cap assembly that is coupled to the opened upper part of the battery case, wherein the cap assembly comprises a safety vent formed with a notch portion, and wherein a gap formed by the notch portion is closed.

The safety vent may be exposed to the outside from the upper end.

The safety vent may be a disk-shaped plate, and the notch portion may have a shape in which a recessed groove extends along a circle.

One end of the upper part of the battery case may be bent to wrap the cap assembly and form a crimping portion.

The crimping portion of the battery case may wrap the safety vent.

The safety vent may include a curling portion bent at the outer peripheral part of the safety vent, and the crimping portion may wrap the curling portion to form a crimping joint.

The safety vent may be formed with a bent portion bent in an upward direction.

According to another embodiment of the present disclosure, there is provided a method for manufacturing a secondary battery, the method comprising the steps of: manufacturing a safety vent; manufacturing a cap assembly including the safety vent; housing the electrode assembly in a battery case having an opened upper part; and joining the cap assembly to the opened upper part of the battery case, wherein the step of manufacturing the safety vent comprises forming a notch portion on one surface of a metal plate material; and closing the gap formed by the notch portion.

The safety vent may be exposed to the outside from the upper end.

The safety vent may be a disk-shaped plate, and the notch portion may have a shape in which a recessed groove extends along a circle.

The step of joining the cap assembly may include a step of bending one end of the upper part of the battery case to form a crimping portion that wraps the cap assembly, the step of manufacturing the safety vent may include a step of bending the flange part formed on the metal plate material to form a curling portion, and in the step of forming the crimping portion, the crimping portion may wrap the curling portion.

In the step of closing the gap formed by the notch portion, a forging step may be performed on both portions with a gap interposed therebetween.

### ADVANTAGEOUS EFFECTS

According to the embodiments of the present disclosure, the upper end cap is removed and the safety vent is exposed to the outside, so that the spatial restriction on the safety vent is eliminated, whereby when the internal pressure rises, the safety vent can be fully opened, which can be effective in discharging gas.

Additionally, the notch portion of the safety vent is provided in a closed structure, whereby when the lead is attached to the safety vent, vibration resistance and structural rigidity of the notch portion can be increased.

The effects of the present disclosure are not limited to the effects mentioned above and additional other effects not described above will be clearly understood from the description of the appended claims by those skilled in the art.

### BRIEF DESCRIPTION OF THE DRAWINGS

Fig. 1 is a partial cross-sectional view which shows a cross-section of the upper part of a conventional cylindrical secondary battery;
Fig. 2 is a partial cross-sectional view which shows a state when the internal pressure of the cylindrical secondary battery of Fig. 1 is increased;
Fig. 3 is an exploded perspective view of a secondary battery according to an embodiment of the present disclosure;\
Fig. 4 is a cross-sectional perspective view of a safety vent included in the secondary battery of Fig. 3;
Fig. 5 is a cross-sectional view of an upper part of a secondary battery according to an embodiment of the present disclosure;
Fig. 6 is a cross-sectional view of an upper part of a secondary battery according to a comparative example of the present disclosure;
Figs. 7a to 7c are schematic diagrams for explaining a method for manufacturing a secondary battery according to an embodiment of the present disclosure;
Figs. 8a to 8c are schematic diagrams for explaining a method for manufacturing a secondary battery according to a comparative example of the present disclosure; and
Fig. 9 is a cross-sectional view that shows the appearance of forming a crimping portion according to an embodiment of the present disclosure.

### DETAILED DESCRIPTION OF IMPLEMENTATIONS

Hereinafter, various embodiments of the present disclosure will be described in detail with reference to the accompanying drawings so that those skilled in the art can easily carry out them. The present disclosure can be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

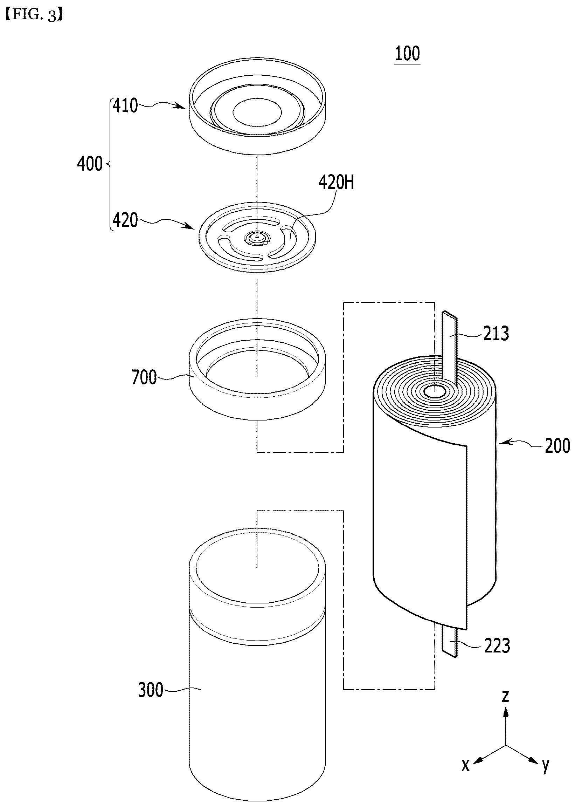

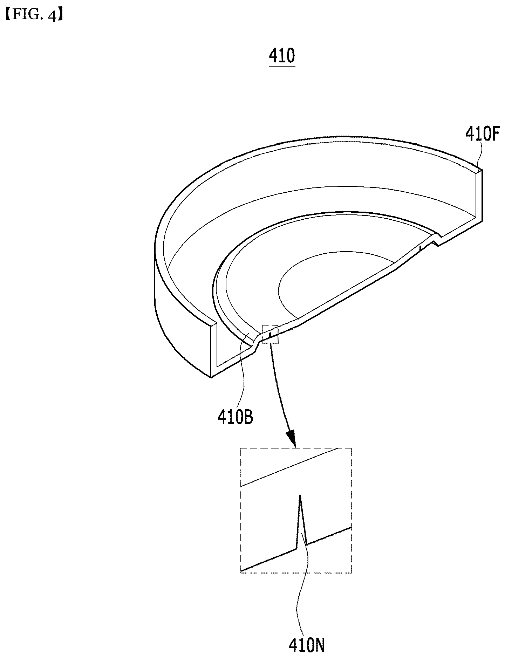

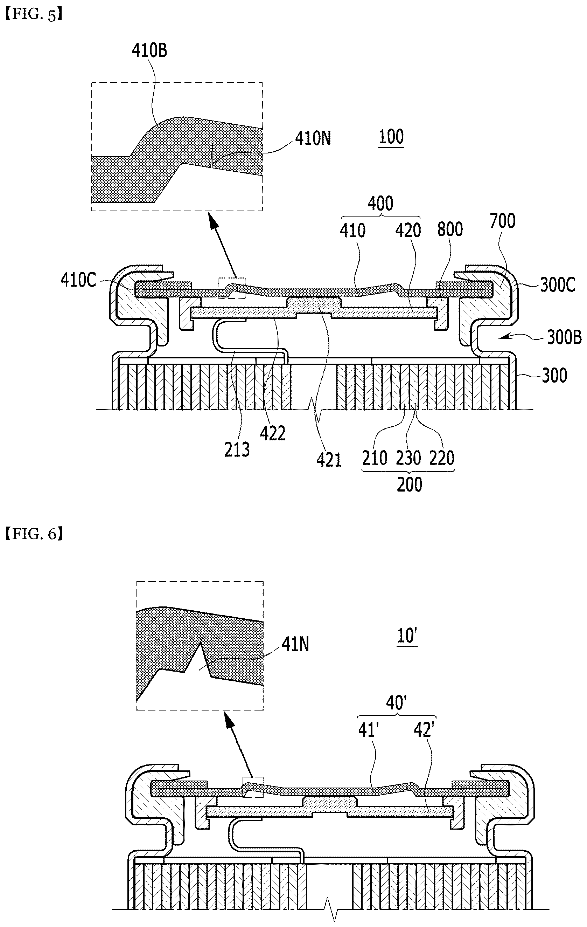

Fig. 3 is an exploded perspective view of a secondary battery according to an embodiment of the present disclosure. Fig. 4 is a cross-sectional perspective view of a safety vent included in the secondary battery of Fig. 3. Fig. 5 is a cross-sectional view of an upper part of a secondary battery according to an embodiment of the present disclosure. Particularly, Fig. 5 is a cross-sectional view which shows the upper part of the cross-section taken along the xz plane after respective components of the secondary battery of Fig. 3 are assembled.

Referring to Figs. 3 to 5, the secondary battery 100 according to an embodiment of the present disclosure includes an electrode assembly 200; a battery case 300 that houses the electrode assembly 200 and has an opened upper part; and a cap assembly 400 that is coupled to the opened upper part of the battery case 300.

First, the electrode assembly 200 according to the present embodiment may include a first electrode 210, a second electrode 220, and a separator 230. The first electrode 210, the second electrode 220, and the separator 230 can be wound together to form the jelly-roll type electrode assembly 200. The separator 230 may be interposed between the first electrode 210 and the second electrode 220.

Although not specifically illustrated, the first electrode 210 can be formed by applying an electrode active material onto the first electrode current collector. Meanwhile, to a portion where the electrode active material is not applied among the first electrode current collector and thus the first electrode current collector is exposed, a first electrode tab 213 can be attached by a method such as welding.

The second electrode 220 can be formed by applying an electrode active material onto the second electrode current collector. Meanwhile, to a portion where the electrode active material is not applied among the second electrode current collector and thus the second electrode current collector is exposed, a second electrode tab 223 can be attached by a method such as welding.

At this time, the first electrode 210 may be a cathode, and the second electrode 220 may be an anode. Thereby, the first electrode tab 213 may be a cathode electrode tab, and the second electrode tab 223 may be an anode electrode tab. Meanwhile, the first electrode tab 213 and the second electrode tab 223 may be protruded in mutually opposite directions with respect to the wound electrode assembly 200. As shown in Fig. 3, the first electrode tab 213 may be protruded in a direction (z-axis direction) in which the cap assembly 400 is located, and the second electrode tab 223 may be protruded in a direction (-z-axis direction) in which the bottom part of the battery case 300 is located.

Meanwhile, the battery case 300 is a structure that houses the electrode assembly 200 impregnated with an electrolyte solution, which may include a metal material and may be a cylindrical case.

The cap assembly 400 according to the present embodiment includes a safety vent 410 in which a notch portion 410N is formed. More specifically, the cap assembly 400 may include a safety vent 410 and a current interrupt device (CID) located below the safety vent 410.

Unlike the conventional cylindrical secondary battery 10 (see Fig. 1), the cap assembly 400 according to the present embodiment has a structure in which the upper end cap is removed, wherein the safety vent 410 may be exposed to the outside from the upper end.

The safety vent 410 is located on the current interrupt device 420 and may be electrically connected to the current interrupt device 420. Specifically, the central portion of the safety vent 410 and the first portion 421 of the current interrupt device 420 described later may be physically and electrically connected. A first electrode tab 213 protruding from the first electrode 210 may be connected to a lower end part of the current interrupt device 420.

The safety vent 410 is a thin structure through which electric current passes, and may be a disk-shaped plate. The notch portion 410N formed in the safety vent 410 may have a shape in which a recessed groove extends along a circle. The safety vent 410, the current interrupt device 420, and the first electrode tab 213 are sequentially connected, so that the safety vent 410 can function as an electrode terminal that guides the electrical connection of the electrode assembly 200.

The current interrupt device 420 according to the present embodiment is a plate member through which electric current passes, and may be formed with through-holes 420H for discharging gas. Further, the current interrupt device 420 may include a first portion 421 connected to the safety vent 410 and a second portion 422 connected to the first electrode tab 213, wherein the first portion 421 may be located at a central portion of the current interrupt device 420, and the second portion 422 may be located at an outer peripheral portion of the current interrupt device 420.

When the internal pressure of the secondary battery 100 rises, the shape of the safety vent 410 may be reversed. According to the shape reversal of the safety vent 410, the first portion 421 of the current interrupt device 420 is raised together, so that the first portion 421 and the second portion 422 of the current interrupt device 420 can be separated from each other. In order to induce this separation due to the increase in internal pressure, the space between the first portion 421 and the second portion 422 can be designed to have a slightly weak strength. Due to the separation of the first portion 421 and the second portion 422, a current between the safety vent 410 and the first electrode tab 213 functioning as an electrode terminal is interrupted.

Additionally, when the internal pressure rises, the notch portion 410N of the safety vent 410 is cut or torn, the safety vent 410 is opened, and internal gas is discharged. In the case of a conventional cylindrical secondary battery 10 (see Fig. 1), the upper end cap 41 is located on the safety vent 42, so that a spatial portion is degraded and the safety vent 42 may not be fully opened. Thus, the gas cannot be effectively discharged. Further, the upper end cap 41 itself may interfere with gas discharge. Unlike the same, in the secondary battery 100 according to the present embodiment, since the safety vent 410 is exposed to the outside from the upper end without an upper end cap, the shape of the safety vent 410 can be freely reversed or separated when the internal pressure rises. Therefore, it is more effective for gas discharge as compared with the conventional cylindrical secondary battery 10.

Next, the advantages that the safety vent 410 according to the present embodiment has over the safety vent 41'according to the comparative example of the present disclosure will be described with reference to Figs. 5 and 6.

Fig. 6 is a cross-sectional view of an upper part of a secondary battery according to a comparative example of the present disclosure. Referring to Fig. 6, the secondary battery 10' according to this comparative example includes a cap assembly 40', wherein the cap assembly 40' includes a safety vent 41' and a current interrupt device 42'. At this time, a notch portion 41N for gas discharge may be formed in the safety vent 41', wherein the notch portion 41N may form an opened structure while a gap is widened.

When the upper end cap is removed and the safety vent 41' is exposed to the outside from the upper end and functions as an electrode terminal, an electrode lead or the like can be joined to the safety vent 41'. At this time, the electrode lead can be attached to the safety vent 41' using vibration, but in the case of the method using vibration, vibration resistance may be lowered due to the opened notch portion 41N, which may limit the electrode lead attachment process. In other words, the notch portion 41N does not withstand the applied vibration, which may cause a problem of being cut or tore. If the depth of the notch portion 41N is set to be shallow to improve this, the notch portion 41N does not rather break when the internal pressure rises, which may cause a problem that the safety vent 410 does not operate properly.

Unlike the opened notch portion 41N in the comparative example, referring to Figs. 4 and 5, the gap formed by the notch portion 410N according to the present embodiment is closed. In Figs. 4 and 5, in order to explain the groove structure, the gap of the notch portion 410N is expressed to be slightly widened, but this is for convenience of explanation, and the notch portion 410N according to the present embodiment may have a closed structure so that both portions with a gap interposed therebetween are in contact with each other. Since the notch portion 410N forms a closed structure in this way, vibration resistance and structural rigidity are improved. Therefore, even when vibration is applied to the safety vent 410 to attach the electrode lead, the electrode lead may be attached without damaging the safety vent 410. At the same time, since the depth of the recessed groove structure in the notch portion 410N is maintained as it is, the notch portion 410N is cut when the internal pressure rises, so that separation of the safety vent 410 can be performed normally. That is, when the internal pressure rises, the discharge of gas may be smoothly performed.

Meanwhile, referring to Fig. 5 again, the battery case 300 according to the present embodiment may include a crimping portion 300C and a beading portion 300B. The beading portion 300B refers to a portion in which a part of the cylindrical battery case 300 is recessed in the center direction of the electrode assembly 200, which is for stable coupling of the cap assembly 400 and preventing flow of the electrode assembly 200. The crimping portion 300C is located above the beading portion 300B and refers to a portion that wraps the cap assembly 400. One end of the upper part of the battery case 300 can be bent to wrap the cap assembly 400 and form a crimping portion 300C.

A sealing gasket 700 may be mounted on inner surfaces of the crimping portion 300C and the beading portion 300B to increase a sealing force between the cap assembly 400 and the battery case 300. That is, the gasket 700 is located between the battery case 300 and the cap assembly 400, and one end of the upper end of the battery case 300 may be bent to form a crimping joint, so that the crimping portion 300C can be formed. Thereby, mounding of the cap assembly 400 and sealing of the secondary battery 100 can be performed. The gasket 700 may be located between the crimping portion 300C and the safety vent 410.

Meanwhile, a bent portion 410B may be formed in the safety vent 410 according to the present embodiment. Specifically, as shown in Fig. 5, a part of the safety vent 410 can be bent in an upward direction to form a bent portion 410B. Such a bent portion 410B is formed, so that the deformation transferred to the safety vent 410 during crimp joining can be reduced. Further, as described above, as the shape of the safety vent 410 is reversed in an abnormal operating state, the first portion 421 of the current interrupt device 420 rises together, and the first portion 421 and the second portion 422 of the current interrupt device 420 are separated from each other. Thereby, the flow of current is interrupted, and it is preferable that a certain amount of gap is formed between the safety vent 410 and the current interrupt device 420 for effective current interruption. Therefore, the bent portion 410B bent in an upward direction can be formed to increase the distance between the safety vent 410 and the current interrupt device 420 while minimizing the height of the cap assembly 400 itself.

Meanwhile, in the case of crimp joining, the strong physical compression may be applied to the cap assembly 400, which may cause a problem that the cap assembly 400 is damaged. In particular, as in the present embodiment, there is a risk that the safety vent 410 is damaged in a structure in which the safety vent 410 is exposed without an upper end cap. Even so, if the safety vent 410 is formed thicker than before in order to supplement the rigidity of the safety vent 410, there is a high possibility that the shape reversal or separation of the safety vent 410 will not be realized correctly when the internal pressure rises.

In the cap assembly according to the present embodiment, a curling portion 410C can be provided in a portion corresponding to the crimping portion 300C among the safety vent 410, instead of simply increasing the thickness of the safety vent 410. Specifically, the safety vent 410 may include a curling portion 410C bent at an outer peripheral portion of the safety vent 410. For convenience of explanation, Figs. 3 and 4 show a state of the flange part 410F before the curling portion 410C is formed, and Fig. 5 shows a state in which the flange portion 410F is bent to form the curling portion 410C.

The crimping portion 300C of the battery case 300 may wrap the safety vent 410 with the gasket 700 interposed therebetween. Among them, a crimping joint may be formed around the curling portion 410C of the safety vent 410. Therefore, the central portion of the safety vent 410 provided with the notch portion 410N is made of one layer, but the outer peripheral portion of the safety vent 410 wrapped around the crimping portion 300C may be formed of two layers. That is, by providing the curling portion 410C, damage to the safety vent 410 that may occur during crimping is prevented and at the same time, it does not interfere with the shape reversal or separation of the safety vent 410 when the internal pressure rises.

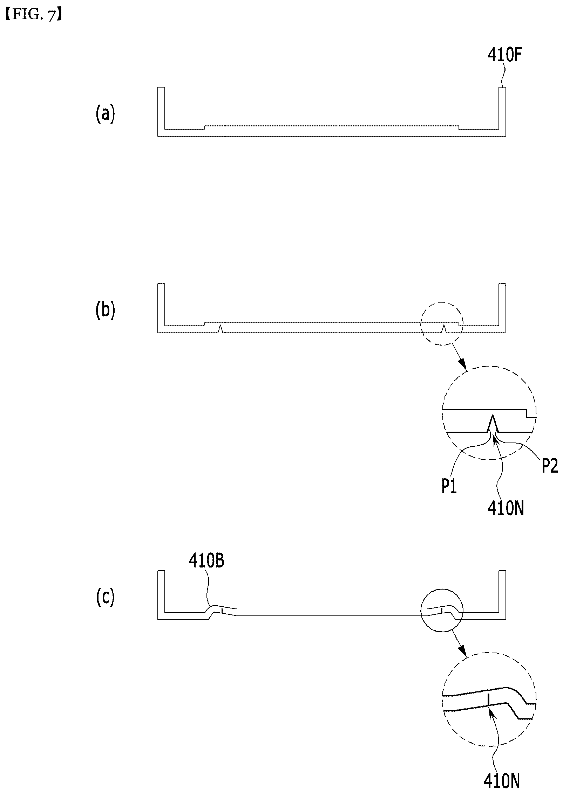

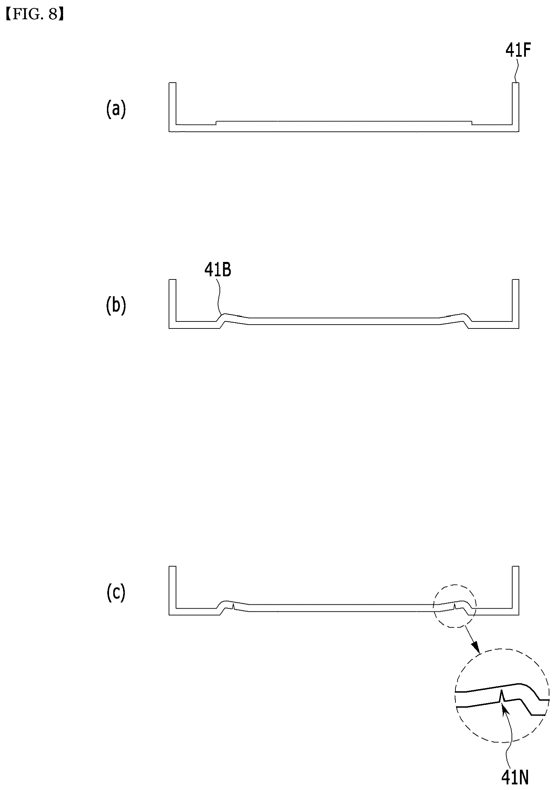

Next, a method for manufacturing a secondary battery according to an embodiment of the present disclosure will be described in detail with reference to Figs. 7a to 7c and Figs. 8a to 8c. However, portions overlapping with the above-mentioned contents will be omitted to avoid repetition of the description.

Figs. 7a to 7c are schematic diagrams for explaining a method for manufacturing a secondary battery according to an embodiment of the present disclosure.

Referring to Figs. 3, 5 and 7a to 7c, a method for manufacturing a secondary battery includes a step of manufacturing a safety vent 410; a step of manufacturing a cap assembly 400 including the safety vent 410; a step of housing the electrode assembly 200 in a battery case 300 having an opened upper part; and a step of joining the cap assembly 400 to the opened upper part of the battery case 300. The step of manufacturing the safety vent 410 includes a step of forming a notch portion 410N on one surface of the metal plate material; and a step of closing the gap formed by the notch portion 410N.

Specifically, the metal plate material is a member for forming the safety vent 410, and may be a disk-shaped plate. As shown in Fig. 7a, the outer peripheral portion of the metal plate material can be bent upward to form a flange portion 410F. Next, as shown in Fig. 7b, a notch portion 410N may be formed on one surface of the metal plate material. The notch portion 410N formed in the safety vent 410 may have a shape in which a recessed groove extends along a circle. Meanwhile, in Fig. 7b, it is shown that the notch portion 410N is formed on the lower surface of the metal plate material, but a notch portion 410N may be formed in the upward direction of the flange portion 410F, that is, on the upper surface of the metal plate material.

Next, as shown in Fig. 7c, the step of bending the metal plate material in an upward direction to form a bent portion 410B and closing a gap formed by the notch portion 410N can be performed. That is, a closed structure may be formed such that gaps formed by the notch portion 410N come into contact with each other together with the formation of the bent portion 410B.

In more detail, in the step of closing the gap of the notch portion 410N, a forging step may be performed. That is, in the step of closing the gap of the notch portion 410N, a forging step may be performed on both portions P1 and P2 with a gap interposed therebetween. The forging step is to reduce the thickness of the area near the notch 410N. When the thickness of both portions P1 and P2 with a gap interposed therebetween is made thin, the corresponding portion is naturally pushed to the side, and the gap formed by the notch portion 410N can be closed.

Meanwhile, Figs. 8a to 8c are schematic diagrams for explaining a method for manufacturing a secondary battery according to a comparative example of the present disclosure.

First, referring to Fig. 8a, the outer peripheral portion of the metal plate material can be bent upward to form a flange portion 41F. Next, as shown in Fig. 8b, the step of bending the metal plate material to produce a bent portion 41B can be performed. Next, as shown in Fig. 8C, a notch portion 41N may be formed on one surface of the metal plate material. In this comparative example, the bent portion 41B and the notch portion 41N are formed in the metal plate material, but the forging step of closing the gap of the notch portion 41N is not performed. Meanwhile, in the present embodiment, when the bent portion 410B is formed on the metal plate material after forming the notch portion 410N, a forging step may be additionally performed. By adding a forging step to the step of forming the bent portion 410B, the bent portion 410B can be formed, and the gap formed by the notched portion 410N can be closed. That is, the notch portion 41N having an open structure as shown in Fig. 6 may be manufactured by the method of manufacturing a secondary battery according to the present comparative example, and the notch portion 410N having a closed structure as shown in Fig. 5 can be manufactured by the method of manufacturing the secondary battery according to the present embodiment.

After that, in the step of manufacturing the safety vent 410, the flange portion 410F (see Figs. 4 and 7a) can be bent to form a curling portion 410C (see Fig. 5 ).

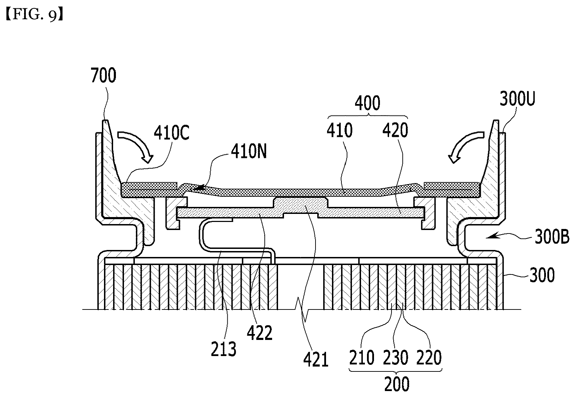

Meanwhile, Fig. 9 is a cross-sectional view which shows a state in which a crimping portion is formed according to an embodiment of the present disclosure.

Referring to Figs. 3 and 9, the safety vent 410 and the current interrupt device 420 manufactured by the above process can be joined to each other to manufacture a cap assembly 400. The electrode assembly 200 and the electrolyte solution are housed in a battery case 300, and then the cap assembly 400 may be coupled to the opened upper part of the battery case 300. As described above, the cap assembly 400 according to the present embodiment has a structure in which the upper end cap is removed, and the safety vent 410 may be exposed to the outside from the upper end.

Specifically, the upper end 300U of the battery case 300 can be bent to form a crimping joint and form a crimping portion 300C (see Fig. 5) for covering the cap assembly 400. A gasket 700 for sealing may be positioned between the cap assembly 400 and the battery case 300.

Through such a manufacturing method, it is possible to manufacture the secondary battery 100 having a safety vent 410 including a notch portion 410N having a closed structure and a curling portion 410C located on the outer periphery.

Although the terms representing directions such as front, rear, left, right, upper and lower directions are used herein, it would be obvious to those skilled in the art that these merely represent for convenience of explanation, and may differ depending on a position of an object, a position of an observer, or the like.

A plurality of secondary batteries described above may be gathered to form a battery module. The battery modules may be mounted together with various control and protection systems such as BDU(battery disconnect unit), BMS (battery management system) and a cooling system to form a battery pack.

The above-mentioned secondary battery, the batter module and the battery pack can be applied to various devices. Such a device can be applied to a vehicle means such as an electric bicycle, an electric vehicle, or a hybrid vehicle, but the present disclosure is not limited thereto, and is applicable to various devices that can use a secondary battery.

Although preferred embodiments of the present disclosure have been described in detail above, the scope of the present disclosure is not limited thereto, and various modifications and improvements made by those skilled in the art using the basic concepts of the present disclosure, which are defined in the appended claims, also belong to the scope of the present disclosure.

### [Description of Reference Numerals]

100: secondary battery
400: electrode assembly
410: safety vent
410N: notch portion
410C: curling portion
In view of the foregoing disclosure, the present invention may be implemented in accordance with the following itemized embodiment examples.
Item 1. A secondary battery comprising:
   an electrode assembly;
   a battery case that houses the electrode assembly and has an opened upper part; and
   a cap assembly that is coupled to the opened upper part of the battery case,
   wherein the cap assembly comprises a safety vent formed with a notch portion, and wherein a gap formed by the notch portion is closed.
Item 2. The secondary battery of item 1, wherein:
   the safety vent is exposed to the outside from the upper end.
Item 3. The secondary battery of item 1, wherein:
   the safety vent is a disk-shaped plate, and
   the notch portion has a shape in which a recessed groove extends along a circle.
Item 4. The secondary battery of item 1, wherein:
   one end of the upper part of the battery case is bent to wrap the cap assembly and form a crimping portion.
Item 5. The secondary battery of item 4, wherein:
   the crimping portion of the battery case wraps the safety vent.
Item 6. The secondary battery of item 5, wherein:
   the safety vent comprises a curling portion bent at the outer peripheral part of the safety vent, and
   the crimping portion wraps the curling portion to form a crimping joint.
Item 7. The secondary battery of item 1, wherein:
   the safety vent is formed with a bent portion bent in an upward direction.
Item 8. A method for manufacturing a secondary battery, the method comprising the steps of:
   manufacturing a safety vent;
   manufacturing a cap assembly including the safety vent;
   housing the electrode assembly in a battery case having an opened upper part; and joining the cap assembly to the opened upper part of the battery case,
   wherein the step of manufacturing the safety vent comprises,
   forming a notch portion on one surface of a metal plate material; and closing the gap formed by the notch portion.
Item 9. The method for manufacturing a secondary battery of item 8, wherein:
   the safety vent is exposed to the outside from the upper end.
Item 10. The method for manufacturing a secondary battery of item 8, wherein:
   the safety vent is a disk-shaped plate, and
   the notch portion has a shape in which a recessed groove extends along a circle.
Item 11. The method for manufacturing a secondary battery of item 8, wherein:
   the step of joining the cap assembly comprises bending one end of the upper part of the battery case to form a crimping portion that wraps the cap assembly,
   the step of manufacturing the safety vent comprises bending the flange part formed on the metal plate material to form a curling portion, and
   in the step of forming the crimping portion, the crimping portion wraps the curling portion.
Item 12. The method for manufacturing a secondary battery of item 8, wherein:
   in the step of closing the gap formed by the notch portion, a forging step is performed on both portions with a gap interposed therebetween.

## Claims

1. A secondary battery (100) comprising:
an electrode assembly (200);
a battery case (300) that houses the electrode assembly (200) and has an opened upper part; and
a cap assembly (400) that is coupled to the opened upper part of the battery case (300),
wherein the cap assembly (400) comprises a safety vent (410) formed with a notch portion (410N), and
wherein the notch portion (410N) comprises two portions (P1, P2) with a gap interposed therebetween,
**characterized in that** the notch portion is (410N) has a closed structure so that both portions (P1, P2) are in contact with each other.

2. The secondary battery of claim 1, wherein:
the safety vent (410) is a disk-shaped plate, and
the notch portion (410N) has a shape in which a recessed groove extends along a circle.

3. The secondary battery of claim 1, wherein:
one end of the upper part of the battery case (300) is bent to wrap the cap assembly (400) and form a crimping portion (300C).

4. The secondary battery of claim 3, wherein:
the crimping portion (300C) of the battery case wraps the safety vent (410).

5. The secondary battery of claim 4, wherein:
the safety vent (410) comprises a curling portion (410C) bent at the outer peripheral part of the safety vent (410), and
the crimping portion (300C) wraps the curling portion (410C) to form a crimping joint.

6. The secondary battery of any one of preceding claims, wherein the cap assembly (400) further comprises a current interrupt device (420) located below the safety vent (410) and connected physically and electrically to a central portion of the safety vent (410).

7. The secondary battery of any one of preceding claims, wherein:
the safety vent (410) is formed from a metal plate material, and
the notch portion (410N) is formed on one surface of the metal plate material.

8. The secondary battery of claim 6, wherein the notch portion (410N) is formed on a lower surface of the metal plate material.

9. The secondary battery of any one of preceding claims, wherein the safety vent (410) includes a bent portion (310B) bent in an upward direction.

10. The secondary battery of any one of preceding claims, wherein the notch portion (410N) is formed on a bent portion (410B).

11. A method for manufacturing a secondary battery (100), the method comprising the steps of:
manufacturing a safety vent (410);
manufacturing a cap assembly (400) including the safety vent (410);
housing the electrode assembly (200) in a battery case (300) having an opened upper part; and
joining the cap assembly (400) to the opened upper part of the battery case (300),
wherein the step of manufacturing the safety vent (410) comprises,
forming a notch portion (410N) on one surface of a metal plate material; and
closing the gap formed by the notch portion (410N) so that both portions (p1, p2) with the gap interposed therebetween are in contact with each other.

12. The method for manufacturing a secondary battery of claim 11, wherein:
the notch portion (410N) is formed on a lower surface of the metal plate material.

13. The method for manufacturing a secondary battery of claim 11, wherein:
in the step of closing the gap formed by the notch portion (410N), a forging step is performed on both portions with a gap interposed therebetween.

14. The method for manufacturing a secondary battery of claim 13, wherein:
the forging step is additionally performed with the step of bending the metal plate material to form a bent portion (410B).

15. The method for manufacturing a secondary battery of claim 13 or 14, wherein:
the step of closing the gap formed by the notch portion (410N) is performed with a step of bending the metal plate material in an upward direction to form a bent portion (410B).
